(19) **Europäisches Patentamt / European Patent Office / Office européen des brevets**

(11) **EP 4 390 836 A1**

(12) # EUROPEAN PATENT APPLICATION

(43) Date of publication:
26.06.2024   Bulletin 2024/26

(21) Application number: 23218679.1

(22) Date of filing: **20.12.2023**

(51) International Patent Classification (IPC):
**G06T 5/77** *(2024.01)*      **G06T 5/20** *(2006.01)*
**G06T 5/60** *(2024.01)*

(52) Cooperative Patent Classification (CPC):
**G06T 5/20; G06T 5/60; G06T 5/77;**
G06T 2207/10016; G06T 2207/20012;
G06T 2207/20016; G06T 2207/20021;
G06T 2207/20084; G06T 2207/30252

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2022   US 202218087653**

(71) Applicant: **Faurecia Irystec Inc.
Montréal, Québec H2Y 3P4 (CA)**

(72) Inventors:
• **RYU, Seungchul**
**H2Y3P4 MONTREAL (CA)**
• **YOO, Hyunjin**
**H2Y3P4 MONTREAL (CA)**
• **SHYAM, Pranjay**
**H2Y3P4 MONTREAL (CA)**
• **AKHAVAN, TARA**
**H2Y3P4 MONTREAL (CA)**
• **DA SILVA, Edouard**
**H2Y3P4 MONTREAL (CA)**

(74) Representative: **Lavoix
Bayerstraße 83
80335 München (DE)**

(54) **IMAGE ENHANCEMENT TARGETED AT ADDRESSING DEGRADATIONS CAUSED BY ENVIRONMENTAL CONDITIONS**

(57)    A system and method is provided for enhancing an input image based on input image and environment sensor data. The method includes: obtaining an input image from an image sensor; generating sensor feature data, wherein the sensor feature data is based on the input image; for each region of a plurality of regions of the input image, determining a degradation profile based on the sensor feature data, wherein the degradation profile indicates, for each of a plurality of degradations, a degradation amount; and generating an enhanced image based on the degradation profile for each region of the plurality of regions. The method further may include obtaining environment sensor data from a sensor separate from the image sensor, generating sensor feature fusion data, and determining the degradation profile based on the sensor feature fusion data.

EP 4 390 836 A1

## Description

TECHNICAL FIELD

This disclosure relates to methods and systems for processing images and, in particular, addressing image degradations due to, for example, environmental conditions, such as weather, lighting, and/or obstructions that may become attached to a lens.

BACKGROUND

Camera or other sensor output images in automotive applications are often degraded as a result of different weather conditions, including fog, rain, snow, sunlight, night, etc. Such degradation decreases a driver's visibility, thereby increasing the risk of unexpected accidents. Thus, enhancing the visibility of camera output has value in automotive fields, at least for purposes of avoiding or reducing a number of accidents. Many studies had been conducted to remove those degradations, including rain removal, defogging, and low-light image enhancement. However, those algorithms were limited to specific single degradation. Various weather conditions may result in multiple and complex image degradations rather than a single degradation for specific weather.

SUMMARY

According to one aspect of the disclosure, there is provided a method for generating an enhanced image. The method includes: obtaining an input image from an image sensor; generating sensor feature data, wherein the sensor feature data is based on the input image; for each region of a plurality of regions of the input image, determining a degradation profile based on the sensor feature data, wherein the degradation profile indicates, for each of a plurality of degradations, a degradation amount; and generating an enhanced image based on the degradation profile for each region of the plurality of regions.

According to various embodiments, the method may further include any one of the following features or any technically-feasible combination of some or all of the features:

- generating the sensor feature data includes generating a combined feature vector based on the input image and environment sensor data and then generating a reduced feature vector based on dimension reduction of the combined feature vector, and wherein the environment sensor data is obtained from an environment sensor that is separate from the image sensor;
- the dimension reduction of the combined feature vector is performed using principal component analysis (PCA);

- the combined feature vector is generated using a machine learning (ML) and feature description techniques;
- the plurality of regions includes a global region and a first plurality of regions corresponding to a first local scale;
- the plurality of regions includes a second plurality of regions corresponding to a second local scale that is different than the first local scale;
- each region of the first plurality of regions corresponds to a local block of the input image;
- multiscale degradation profile data is generated based on determining the degradation profile for at least one region of the first plurality of regions and the degradation profile for the global region;
- the multiscale degradation profile data is used to determine one or more controlling parameters that are used as input into one or more image enhancement techniques so as to control the one or more image enhancement techniques when applied to the input image to generate the enhanced image;
- generating the enhanced image includes: (i) applying at least one of the one or more image enhancement techniques to the global region to generate an enhanced global image; (ii) applying at least one other image enhancement technique of the one or more image enhancement techniques to at least one of the first plurality of regions so as to generate an enhanced local image layer; and (iii) generating the enhanced image based on the enhanced global image layer and the enhanced local image layer;
- for the degradation profile for each region of the plurality of regions, the plurality of degradations include a predetermined plurality of degradations, and wherein an output degradation value is determined for each of the predetermined plurality of degradations;
- the output degradation value for each of the predetermined plurality of degradations is used for determining a controlling parameter for use by an image enhancement technique for controlling application of the image enhancement technique when generating the enhanced image;
- the degradation profiles are determined as a result of a machine learning technique that takes, as input, the sensor feature data and generates, as output, the degradation amount;
- the sensor feature data is generated by generating a reduced feature vector based on dimension reduction of a feature vector having feature values extracted from the input image;
- the reduced feature vector is generated using a machine learning (ML) technique that takes, as input, the input image and/or the feature vector and generates, as output, the reduced feature vector; and/or
- a first enhanced local image layer is generated for a first plurality of regions of the plurality of regions and a second enhanced local image layer is generated for a second plurality of regions of the plurality of regions, wherein the first plurality of regions is sized according to a first scale and the second plurality of regions is sized according to a second scale that is different than the first scale, and wherein the first enhanced local image layer and the second enhanced local image layer are combined to form the enhanced image.

According to another aspect of the disclosure, there is provided an image enhancement system. The image enhancement system includes: at least one processor; and memory storing computer instructions. The image enhancement system is configured so that the at least one processor executes the computer instructions, which, when executed by the at least one processor, cause the image enhancement system to: (i) obtain an input image from an image sensor; (ii) generate sensor feature fusion data, wherein the sensor feature data is based on the input image; (iii) for each region of a plurality of regions of the input image, determine a degradation profile based on the sensor feature data, wherein the degradation profile indicates, for each of a plurality of degradations, a degradation amount; and (iv) generate an enhanced image based on the degradation profile for each region of the plurality of regions.

According to yet another aspect of the disclosure, there is provided an onboard image enhancement system for a vehicle. The onboard image enhancement system includes: an onboard vehicle computer for a vehicle having at least one processor and memory storing computer instructions; an image sensor configured to be mounted onto the vehicle and to face an area exterior to the vehicle and configured to capture one or more input images; and an environment sensor configured to capture environment data concerning the environment of the vehicle. The onboard vehicle computer is configured so that when the at least one processor executes the computer instructions, the onboard vehicle computer processes the one or more input images to generate one or more enhanced images using an image enhancement process that includes: (i) obtaining the input image from the image sensor; (ii) obtaining the environment sensor data from the environment sensor; (iii) generating sensor feature fusion data, wherein the sensor feature fusion data is based on the input image and the environment sensor data; (iv) for each region of a plurality of regions of the input image, determining a degradation profile based on the sensor feature fusion data, wherein the degradation profile indicates, for each of a plurality of degradations, a degradation amount; (v) generating an enhanced image based on the degradation profile for each region of the plurality of regions; and (vi) providing the enhanced image for display at an electronic display of the vehicle.

According to various embodiments, the onboard image enhancement system may further include any one of the following features or any technically-feasible combination of some or all of the features:

- the one or more input images include a plurality of images part of an input video stream, wherein the one or more enhanced images are a plurality of enhanced images; and/or
- the onboard image enhancement system is configured to cause the plurality of enhanced images to be displayed at the electronic display as an enhanced video stream.

## BRIEF DESCRIPTION OF THE DRAWINGS

Preferred exemplary embodiments will hereinafter be described in conjunction with the appended drawings, wherein like designations denote like elements, and wherein:

FIG. 1 is an operating environment that includes an image enhancement system that is used to carry out one or more of the methods described herein, according to one embodiment;
FIG. 2 is a diagrammatic view of processing modules that may be used as, or as a part of, an image enhancement system, such as the image enhancement system of FIG. 1, according to one embodiment;
FIG. 3 shows a flowchart depicting a method of enhancing an input image, according to one embodiment; and
FIG. 4 shows a flowchart displaying a method of enhancing an input image based on a multi-scale degradation profile, according to one embodiment.

## DETAILED DESCRIPTION

A system and method is provided for generating an enhanced image based on an input image that has degradations due to, for example, environmental conditions and, particularly, for generating an enhanced image that has been enhanced with respect to multiple types of degradations affecting different portions of the input image. According to embodiments, an input image is used to generate sensor feature data, which is then used to generate a degradation profile for each of a plurality of regions. The degradation profiles are then used to determine controlling parameters for image enhancement techniques that are then applied to the input image in accordance with the controlling parameters to generate the enhanced image. In embodiments, environment sensor data from an environment sensor separate from the image sensor used to capture the input image is obtained and used with the input image to generate sensor feature fusion data, which is a type of the sensor feature data used to generate the degradation profile for each of the plurality of regions.

For example, an input image captured by a camera or other image sensor may be degraded due to different reasons that are dependent on the environment, such as weather conditions (e.g., rain streaks on a lens, fog, snow), lighting conditions (e.g., low light, sun glare), and the degradations may each affect the input images at different portions/regions, to different extents, and/or in a different manner (e.g., rain streak may cause different degradative effects than those caused by sun glare). According to embodiments, the system and method provided herein enable enhancement of such an input image through a multiscale degradation profiling process that determines multiscale degradation profile data indicating a degradation profile for each of a plurality of regions, where at least two regions are sized according to different scales-for example, in one embodiment, a first region (or global region) is set according to a first scale (or global scale) and a second region (or local region) is set according to a second scale (or local scale). In other embodiments, multiple local scales may be used to define regions of the plurality of regions.

As will be discussed in more detail below, a method of generating an enhanced image is provided, and an image enhancement system configured to perform this method is provided. According to embodiments, the method of generating an enhanced image includes: obtaining an input image from an image sensor; obtaining environment sensor data from an environment sensor separate from the image sensor; generating sensor feature fusion data, wherein the sensor feature fusion data is based on the input image and the environment sensor data; for each region of a plurality of regions of the input image, determining a degradation profile based on the sensor feature fusion data, wherein the degradation profile indicates, for each of a plurality of degradations, a degradation amount; and generating an enhanced image based on the degradation profile for each region of the plurality of regions.

In embodiments, an image enhancement process that includes generating an enhanced image based on an input image and sensor data is provided, and the image enhancement process is used to address any and all combinations of a set of predetermined degradations, and thus may be used to generate an enhanced image in real-time (e.g., for live streaming) that simultaneously addresses degradations of multiple types located throughout the input image. In embodiments, the system and method provided herein enable consideration of numerous environmental conditions or features (determined based on the environment sensor data) as well as image features (determined based on the input image) while providing for low latency through use of a sensor feature reduction process in which sensor feature data having a reduced feature space is generated, such as through use of principle component analysis (PCA). The sensor feature data is then mapped to multiscale degradation profile data that is used to inform a type, location, and extent of image processing technique to apply to the input image to generate the enhanced image. According to embodiments, this enables consideration of a wide array of potential features determined from different sensor sources quickly so as to detect and address any of a variety of potential environment-related degradations in the input image and, in embodiments, enables combining weather information with feature information from an input image to inform the degradation profiling process. According to embodiments, separate processes for determining whether to apply each of a set of image enhancement techniques may take time as often the input image (or portions thereof) is processed to make such determinations. According to embodiments, the sensor feature fusion provided herein enables generating degradation profiles specifying degradation amounts and types for multiple degradations.

In embodiments, the environment sensor data includes sensor data from a plurality of environment sensors, each of which is separate from the image sensor that captures the input image. Accordingly, in embodiments, the system and method provided herein enables consideration of sensor data from multiple types of environment sensors (beyond the image sensor) in combination with the input image; for example, environment features may be extracted from the environment sensor data from each of the plurality of environment sensors and then combined with the image features extracted from the input image.

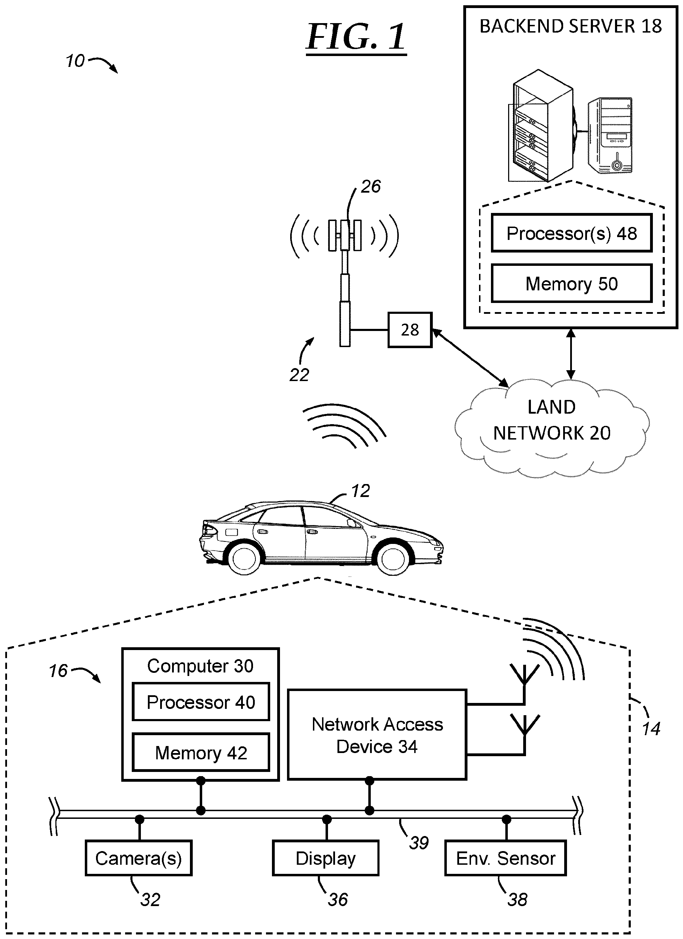

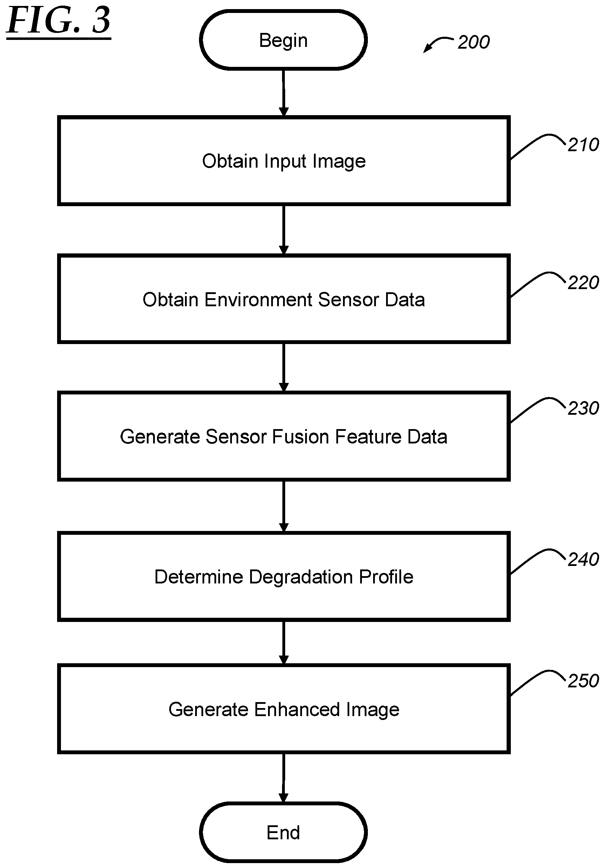

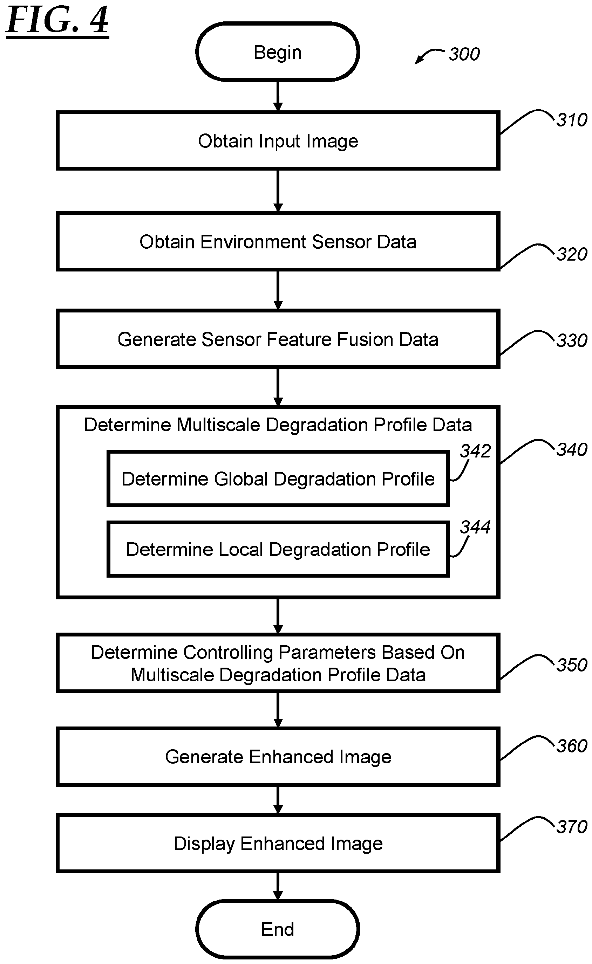

With reference now to FIG. 1, there is shown an operating environment that comprises a communications system 10, a vehicle 12 having vehicle electronics 14 including an image enhancement system 16, one or more backend servers 18, a land network 20, and a wireless carrier system 22. According to at least some embodiments, the image enhancement system 16 is configured to carry out one or more of the methods described herein, such as methods 200 (FIG. 3) and 300 (FIG. 4). It should be appreciated that although the image enhancement system 16 is discussed in the context of a vehicular application, the image enhancement system 16 may be used as a part of a variety of other applications or contexts, such as where the image enhancement system 16 is incorporated into a handheld mobile device (e.g., smartphone), a personal computer (e.g., laptop, desktop computer), or cloud processing system. In one embodiment, the image enhancement system 16 is incorporated into another computer or computer system, such as the backend server(s) 18.

The land network 20 and the wireless carrier system 22 provide an exemplary long-range communication or data connection between the vehicle 12 and the backend server(s) 18, for example. Either or both of the land network 20 and the wireless carrier system 22 may be used by the vehicle 12, the backend server(s) 18, or other component for long-range communications. The land network 20 may be any suitable long-range electronic data network, including a conventional land-based telecommunications network that is connected to one or more landline telephones and connects the wireless carrier system 22 to the backend server(s) 18, for example. In some embodiments, the land network 20 may include a public switched telephone network (PSTN) such as that used to provide hardwired telephony, packet-switched data communications, and the Internet infrastructure. One or more segments of the land network 20 may be implemented through the use of a standard wired network, a fiber or other optical network, a cable network, power lines, other wireless networks such as wireless local area networks (WLANs), or networks providing broadband wireless access (BWA), or any combination thereof.

The wireless carrier system 22 may be any suitable wireless long-range data transmission system, such as a cellular telephone system. The wireless carrier system 22 is shown as including a single cellular tower 26; however, the wireless carrier system 22 may include additional cellular towers as well as one or more of the following components, which may depend on the cellular technology being used: base transceiver stations, mobile switching centers, base station controllers, evolved nodes (e.g., eNodeBs), mobility management entities (MMEs), serving and PGN gateways, etc., as well as any other networking components used to connect the wireless carrier system 22 with the land network 20 or to connect the wireless carrier system 22 with user equipment (UEs, e.g., which may include telematics equipment in the vehicle 12), all of which is indicated generally at 28. The wireless carrier system 22 may implement any suitable communications technology, including for example GSM/GPRS technology, CDMA or CDMA2000 technology, LTE technology, 5G, etc. In at least one embodiment, the wireless carrier system 22 implements 5G cellular communication technology and includes suitable hardware and configuration. In some such embodiments, the wireless carrier system 22 provides a 5G network usable by the vehicle 12 for communicating with the backend server(s) 18 or other computer/device remotely located from the vehicle 12. In general, the wireless carrier system 22, its components, the arrangement of its components, the interaction between the components, etc. is generally known in the art.

The vehicle 12 is depicted in the illustrated embodiment as a passenger car, but it should be appreciated that any other vehicle including motorcycles, trucks, sports utility vehicles (SUVs), recreational vehicles (RVs), bicycles, other vehicles or mobility devices that can be used on a roadway or sidewalk, etc., can also be used. As depicted in the illustrated embodiment, the vehicle 12 includes the vehicle electronics 14, which include an onboard vehicle computer 30, one or more cameras 32, a network access device 34, an electronic display (or "display") 36, one or more environmental sensors 38, and a vehicle communications bus 39. FIG. 1 provides an example of certain components of the vehicle electronics 14, however, it should be appreciated that, according to various embodiments, the vehicle electronics 14 may include one or more other components in addition to or in lieu of those components depicted in FIG. 1.

The one or more cameras 32 are each an image sensor used to obtain an input image having image data of the vehicle's environment, and the image data, which represents an image captured by the camera(s) 32, may be represented as an array of pixels that specify color information. The camera(s) 32 may each be any suitable digital camera or image sensor, such as a complementary metal-oxide-semiconductor (CMOS) camera/sensor. The camera(s) 32 are each connected to the vehicle communications bus 39 and may provide image data to the onboard vehicle computer 30. In some embodiments, image data from one or more of the camera(s) 32 is provided to the backend server(s) 18. The camera(s) 32 may be mounted so as to view various portions within or surrounding the vehicle. It should be appreciated that other types of image sensors may be used besides cameras that capture visible (RGB) light, such as thermal or infrared image sensors, and/or various others.

The network access device 34 is used by the vehicle 12 to access network(s) that are external to the vehicle 12, such as a home Wi-Fi™ network of a vehicle operator or one or more networks of the backend server(s) 18. The network access device 34 includes a short-range wireless communications (SRWC) circuit (not shown) and a cellular chipset (not shown) that are used for wireless communications. The SRWC circuit includes an antenna and is configured to carry out one or more SRWC technologies, such as any one or more of the IEEE 802.11 protocols (e.g., IEEE 802.11p, Wi-Fi™), WiMAX™, ZigBee™, Z-Wave™, Wi-Fi direct™, Bluetooth™ (e.g., Bluetooth™ Low Energy (BLE)), and/or near field communication (NFC). The cellular chipset includes an antenna and is used for carrying out cellular communications or long-range radio communications with the wireless carrier system 22, and the cellular chipset may be part of a vehicle telematics unit. And, in one embodiment, the cellular chipset includes suitable 5G hardware and 5G configuration so that 5G communications may be carried out between the vehicle 12 and the wireless carrier system 22, such as for purposes of carrying out communications between the vehicle 12 and one or more remote devices/computers, such as those implementing the backend server(s) 18.

The one or more environment sensors (or environment sensor(s)) 38 are used to capture environment sensor data indicating a state of the environment in which the camera(s) 32 (and the vehicle 12) is located. At least in some embodiments, the environment sensor data is used as a part of the method described herein in order to generate sensor feature fusion data. The environment sensor(s) 38 may each be any of a variety of environment sensors, which is any sensor that captures environment sensor data; for example, examples of environment sensors include a camera, another image sensor, a thermometer, a precipitation sensor, and a light sensor; however, a variety of other types of sensors may be used. The environment sensor data is used to determine environment feature information, which may be combined with extracted features from image data of an input image to generate the sensor feature fusion data usable for determining a degradation profile specifying enhancements to be applied to the input image to generate an enhanced image, as discussed below with regard to the methods 200 (FIG. 3) and 300 (FIG. 4).

The onboard vehicle computer 30 is an onboard computer in that it is carried by the vehicle 12 and is considered a vehicle computer since it is a part of the vehicle electronics 14. The onboard vehicle computer 30 includes at least one processor 40 and non-transitory, computer-readable memory 42 that is accessible by the at least one processor 40. The onboard vehicle computer 30 may be used for various processing that is carried out at the vehicle 12 and, in at least one embodiment, forms at least a part of the image enhancement system 16 and is used to carry out one or more steps of one or more of the methods described herein, such as the methods 200 (FIG. 3) and/or 300 (FIG. 4). The onboard vehicle computer 30 is connected to the vehicle communications bus 39 and may send messages to, and receive messages from, other vehicle components using this bus 39. The onboard vehicle computer 30 may be communicatively coupled to the network access device 34 so that data may be communicated between the onboard vehicle computer 30 and a remote network, such as the backend server(s) 18.

The image enhancement system 16 is used to carry out at least part of the one or more steps discussed herein. As shown in the illustrated embodiment, the image enhancement system 16 is implemented by one or more processors and memory of the vehicle 12, which may be or include the at least one processor 40 and memory 42 of the onboard vehicle computer 30. In some embodiments, the image enhancement system 16 may additionally include the camera(s) 32 and/or the environment sensor(s) 38. In one embodiment, at least one of the one or more processors carried by the vehicle 12 that forms a part of the image enhancement system 16 is a graphics processing unit (GPU). The memory 42 stores computer instructions that, when executed by the at least one processor 40, cause one or more of the methods (or at least one or more steps thereof), such as the methods 200 (FIG. 3) and/or 300 (FIG. 4) discussed below, to be carried out. In embodiments, one or more other components of the vehicle 12 and/or the communications system 10 may be a part of the image enhancement system 16, such as the camera(s) 32 (or image sensor(s)) and/or the environment sensor(s) 38.

The one or more backend servers (or backend server(s)) 18 may be used to provide a backend for the vehicle 12, image enhancement system 16, and/or other components of the system 10. The backend server(s) 18 are shown as including one or more processors 48 and non-transitory, computer-readable memory 50. In one embodiment, the image enhancement system 16 is incorporated into the backend server(s) 18. For example, in at least one embodiment, the backend server(s) 18 are configured to carry out one or more steps of the methods described herein, such as the methods 200 (FIG. 3) and/or 300 (FIG. 4). In another embodiment, the backend server(s) 18 is used to store information concerning and/or pertaining to the vehicle 12 or image enhancement system 16, such as predetermined degradation profile information, as described below. The predetermined degradation profile information is information that associates a particular degradation (and/or features associated with the particular degradation) with an image enhancement technique. This information may be periodically updated by the backed server(s) 18 transmitting updated degradation profile information to the vehicle 12. The backend server(s) 18 may be implemented or hosted by one or more computers, each of which includes a processor and a non-transitory, computer-readable memory that is accessible by the processor.

In one embodiment, the backend server(s) 18 provide an application programming interface (API) that is configured to receive an input image from a remote computer system, generate an enhanced image using the method described herein, and then provide the enhanced image to the remote computer system, such that the backend server(s) 18 provide software as a service (SaaS) providing image enhancement according to the method described herein.

Any one or more of the processors discussed herein may be implemented as any suitable electronic hardware that is capable of processing computer instructions and may be selected based on the application in which it is to be used. Examples of types of processors that may be used include central processing units (CPUs), graphics processing units (GPUs), field-programmable gate arrays (FPGAs), application specific integrated circuits (ASICs), microprocessors, microcontrollers, etc. Any one or more of the non-transitory, computer-readable memory discussed herein may be implemented as any suitable type of memory that is capable of storing data or information in a non-volatile manner and in an electronic form so that the stored data or information is consumable by the processor. The memory may be any a variety of different electronic memory types and may be selected based on the application in which it is to be used. Examples of types of memory that may be used include including magnetic or optical disc drives, ROM (read-only memory), solid-state drives (SSDs) (including other solid-state storage such as solid state hybrid drives (SSHDs)), other types of flash memory, hard disk drives (HDDs), non-volatile random access memory (NVRAM), etc. It should be appreciated that any one or more of the computers discussed herein may include other memory, such as volatile RAM that is used by the processor, and/or multiple processors.

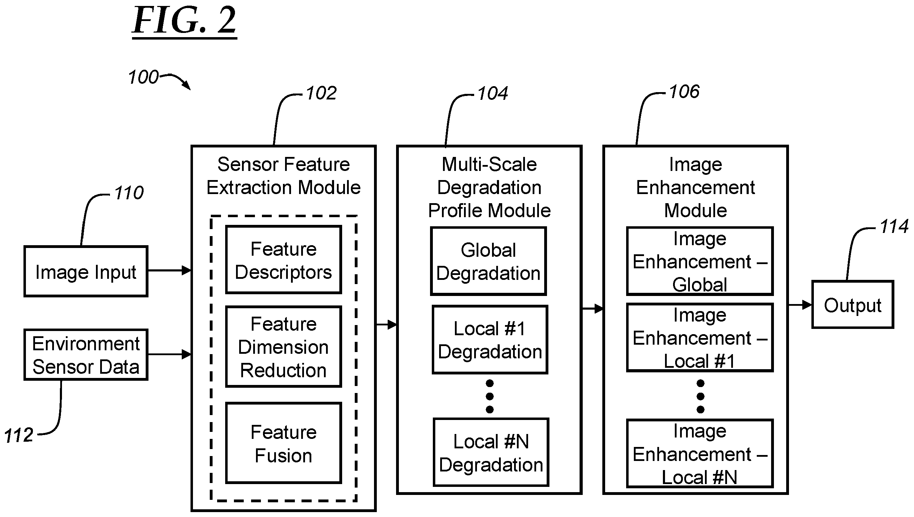

With reference to FIG. 2, there is shown a diagrammatic depiction of modules that may be used as a part of an image enhancement system 100 and, specifically, a sensor feature extraction module 102, a degradation profile module 104, and an image enhancement module 106, which may be implemented using computer instructions that are executed by one or more processors. For example, the image enhancement system 100 may be implemented on the vehicle 12 as the image enhancement system 16 and, in embodiments, is executed by the onboard computer 30.

The arrows of FIG. 2 indicate data/processing flow, which begins with an input image 110 and ends with outputting an enhanced image 114 to a display, such as the display 36 of the vehicle 12, for displaying the image for viewing by a user. In at least some embodiments, the input image 110 is obtained at the sensor feature extraction module 102. In general, the sensor feature extraction module 102 generates sensor feature data based on the input image 110 and, in embodiments, is a sensor feature fusion extraction module that generates sensor feature fusion data based on the input image 110 and the environment sensor data 112; that is, the sensor feature fusion data is data representing or indicating a feature of an image ("image feature") captured by an image sensor and a feature of the environment ("environment feature") at which the image sensor is located. Although the sensor feature extraction module 102 is shown and described as being a sensor feature fusion extraction module that generates sensor feature fusion data based on the input image 110 and the environment sensor data 112, it should be appreciated that, in other embodiments, the sensor feature extraction module 102 generates sensor feature data that is only based on the input image 110 or not based on the environment sensor data 112; accordingly, in some embodiments, the sensor feature extraction module 102 does not perform sensor feature fusion where features from sensors of different types are combined into sensor feature fusion data.

At least in embodiments, the sensor feature data is based at least in part on a plurality of feature values $f_i$ for image features extracted from the input image. The feature values $f_i$ for image features are referred to herein also as "image feature values". Exemplary image features include, for example, local binary pattern (LBP), Oriented FAST and Rotated BRIEF (ORB), Binary Robust Invariable Scalable Keypoints (BRISK), histogram of gradients, histogram of wavelets, and intensity statistics (e.g., min, mean, and max). The sensor feature data may be sensor feature fusion data that is based in part on a plurality of feature values $f_e$ for environment features extracted from the environment sensor data 112. These feature values $f_e$ for environment features are referred to herein also as "environment feature values". An "image feature" is a feature extracted from an image, such as, for example, the input image 110. An "environment feature" is a feature extracted from environment sensor data, such as the environment sensor data 112, for example. The image feature values $f_i$ and environment feature values $f_e$ may be used to construct a combined feature vector $f_c$. The degradation profile module 104 may then utilize the feature vector $f_c$ to produce a degradation profile; however, to reduce processing time, it may be beneficial to employ feature dimension reduction to obtain a reduced feature vector $f_r$. One technique that may be used for feature dimension reduction is principal component analysis (PCA). In general, principal component analysis is a technique for analyzing large datasets with a high number of dimensions or features per observation. PCA increases the interpretability of the data while simultaneously preserving the maximum usefulness or insightfulness about of information. Of course, those skilled in the art will appreciate other feature space reduction techniques so as to dynamically generate a reduced feature vector representation of the combined feature vector $f_c$ that takes into consideration both image features and environment features for the given image and environment at the time the image is captured.

Given the data obtained at the sensor feature extraction module 102, the degradation profile module 104 constructs one or more degradation profiles for one or more regions. In embodiments, the degradation profile constructs a degradation profile for each region of a plurality of regions, where each region corresponds to an area or portion of the input image 110. The present discussion describes an embodiment in which each region has a degradation profile generated for the region and the degradation profile specifies one or more degradation type-value items, wherein each degradation type-value item specifies a degradation type and a degradation value that indicates an associated value or flag representing an extent or presence of the degradation. The one or more regions of the plurality of regions may be defined according to a first scale. In at least some embodiments, the first scale is a global scale which concerns the input image 110 as a whole (i.e., the entire image to be displayed). The one or more regions of the plurality of regions may also be defined according to a second scale. In some embodiments, the second scale is different from the first scale and the second scale is a local scale which concerns one or more local regions of the input image 110. In embodiments, multiple local scales may be used, such as where the one or more regions further includes a plurality of regions defined according to a third scale that is different that the first scale and the second scale; moreover, it should be appreciated that any suitable number N of scales may be used to define N sets of regions, each of which may include a plurality of regions except where the scale is a global scale.

In general, the one or more degradation profiles may be generated for each of the one or more regions of the plurality of regions, and more specifically, the one or more regions on the global scale, the local scale, or both the global and local scales. In embodiments, multiple local scales of a different size may be used, as mentioned above. The degradation profiles for each of the one or more regions of the plurality of regions are representative of the location of degradations, the type(s) of degradations, and/or the degree of the degradations (i.e., the severity of the degradations). Some examples of degradation type may include visibility drop, blur, noise, dirt, rain streak, or a rain/snowdrop. The degradation type may be stored or represented using a degradation type identifier (ID), such as a string that uniquely identifies a degradation from other degradations. It should be appreciated that the one or more regions of the plurality of regions may include multiple types of degradations. As will be discussed in more detail below and with respect to methods 200 (FIG. 3) and 300 (FIG. 4), the degradation profile uses the reduced feature vector $f_r$ to generate a probability histogram of each degradation based on a 1-vs-all regressors or classifiers analysis. The analysis may produce an output that includes floating point values or binary values (i.e., 1 or 0), for example. Further analysis of regressors and classifiers may be conducted using a variety of machine learning (ML) regression and/or classification techniques, including genetic algorithms, random forests, support vector machines, and/or decision trees, for example. In any case, as a result of the data generation by the degradation profile module 104, controlling parameter values for the global scale, the local scale, or both the global and local scales may be determined by the image enhancement module 106.

The image enhancement module 106 may employ one or more image enhancement algorithms according to the degradation profiles generated at the degradation profile module 104. For example, because a degradation profile for the input image 110 may include a combination of degradations, a variety of image enhancement algorithms may be used to address the degradations and this involves determining one or more controlling parameters based on each detected degradation and, in some embodiments, may take into consideration the compounding effects of multiple degradations in the same region. Exemplary image enhancement algorithms include Perceptual Display Platform (PDP), unsharp filter, Contrast Limited Adaptive Histogram Equalization (CLAHE), and rain removal techniques. Other algorithms not listed here may also be used with the controlling parameters to enhance the input image 110. The controlling parameters, which are determined based on the degradation profiles, are used to adjust the amount of each image enhancement algorithm. So, it is possible that one or more image enhancement algorithms are applied to input image 110 only on a global scale while one or more image enhancement algorithms are applied to the input image 110 only on a local scale. Additionally, it is also possible that one or more image enhancement algorithms are applied to one copy of the input image 110, while one or more image enhancement algorithms are applied to another copy of the input image 110, and then the separately enhanced input images are combined into a final output image. Some techniques used to combine images may include using a merging algorithm, such as alpha blending. For example, the following alpha blending technique may be used for blending two layers (regions defined according to two scales (global and local)):

$$I_{OUT} = \alpha * I_{local} + (1 - \alpha) * I_{global}$$

where $I_{OUT}$ represents the enhanced image, $\alpha$ is an alpha blending value that is predetermined and/or determined as a result of processing and this value may be between 0 and 1 ($0 < \alpha < 1$), $I_{local}$ represents an enhanced local image layer, and $I_{global}$ represents an enhanced global image layer. For example, for an input image of 3000x5000 resolution, an enhanced global image layer for a global region is generated and results in a single (global) block that has a resolution of the input image (3000x5000); further, an enhanced local image layer for a plurality of regions (100 regions in this example) is generated and the enhanced local image layer is comprised of 100 local blocks that each has a resolution of 300x500; here, the 100 blocks correspond to a first plurality of regions, specifically 100 regions that, when taken together, correspond to the input image (but may be enhanced using image enhancement technique(s)). The enhanced global image layer (3000x5000) is combined with the enhanced local image layer to generate the enhanced combined image having a resolution of 3000x5000. In other embodiments, more than one local layer (or local scales) are used and a similar merging or blending technique may be used, such as the following alpha blending technique extending for where there are more than two layers being merged:

$$I_{OUT} = w_1 * I_1 + w_2 * I_2 + \ldots + w_K * I_K$$

*where*

$$w_1 + w_2 + \cdots + w_K = 1$$

where $I_{OUT}$ represents the combined enhanced image, $I_k$ is the k-th image layer, and $w_k$ is the *k*-th alpha blending weight, where *k* an index between 1 and *K* with *K* being the total number of image layers to be combined.

With reference to FIG. 3, there is shown an embodiment of a method 200 of enhancing an input image. According to at least some embodiments, the method 200 is used to generate an enhanced image that is then displayed on the target display, such as the in-vehicle display 36 of the vehicle 12. In one embodiment, the method 200 is carried out by an onboard controller of a vehicle, such as the onboard vehicle computer 30 of the vehicle 12.

The method 200 begins with step 210, wherein an input image is obtained. The input image may be represented as an electronic data file that is stored in memory of the vehicle 12, such as in the memory 42 of the onboard vehicle computer 30 of the vehicle 12. The input image may be an sRGB image, for example. In some embodiments, the input image may be obtained from a camera of the vehicle 12, such as one of the camera(s) 32 of the vehicle 12. In some embodiments, the input image is obtained at the onboard vehicle computer 30 of the vehicle 12. In at least one embodiment, a portion of the input image or the whole input image may be sent from the backend server(s) 18 to the vehicle 12 and obtained at the onboard vehicle computer 30. The method 200 continues to step 220.

In step 220, environment sensor data is obtained. In at least some embodiments, the environment sensor data is gathered by one or more environment sensor(s) 38. The environment sensor data may be represented as an electronic data file that is stored in memory of the vehicle 12, such as in the memory 42 of the onboard vehicle computer 30 of the vehicle 12. As mentioned above, the environment sensor(s) 38 may each be any of a variety of environment sensors, which is any sensor that captures environment sensor data. Some examples of environment sensors include a camera, another image sensor, a thermometer, a precipitation sensor, and a light sensor, however, a variety of other types of sensors may be used. In operation, these sensors may be beneficial for indicating whether it is daytime or nighttime or whether it is raining or snowing, for example. In at least some embodiments, environment feature information may be extracted from the environment sensor data and combined with feature information extracted from input image 110 to generate the sensor feature fusion data. The method 200 proceeds to step 230.

In step 230, sensor feature fusion data is generated based on the input image 110 and environment sensor data 112. The input image 110 and the environment sensor data 112 are captured and feature characteristics are extracted based on one or more feature descriptors, such as those introduced above with respect to the sensor feature extraction module 102, for example. The feature characteristics gathered from the input image 110 and environment sensor data 112 may then be combined into a feature vector $f_c$. In at least some embodiments, feature dimension reduction may be used on the feature vector $f_c$ to obtain the reduced feature vector $f_r$. In embodiments, principal component analysis (PCA) is used, but other techniques may be used as well. It should be appreciated that, in some embodiments, step 220 is omitted, step 230 is modified to generate sensor feature data based on the input image, and step 240 is modified to generate the degradation profile based on the sensor feature data. The method 200 continues to step 240.

In step 240, the degradation profile is determined for each degradation based on the sensor feature fusion data received at the sensor feature extraction module 102. In some embodiments, the degradation profile is used to generate a probability histogram of each degradation based on 1-vs-all regressors analysis. In general, the output degradation profile can be floating point values (as provided in examples below) or binary (i.e., 1 or 0) types according to the employed regressor or classifier. At this stage, the degradation profile output may indicate, for each degradation, the type of degradation (e.g., fog, rain, snow, dirt, time of day, etc.) and a degradation amount or value (e.g., a value between 0 and 1). For instance, if the input image 110 includes mild fog, the fog degradation amount may be 0.53. However, if the input image 110 includes severe fog, the fog degradation amount may be 0.78. Similarly, if the input image 110 includes heavy rain, the rain degradation amount may be 0.74. If the input image 110 includes rain and the time of day is at night, the rain type degradation amount may be 0.3 and the time-of-day degradation amount may be 0.4. Other combinations of degradation types and amounts are possible, as the above examples are only three of n-number of combinations. The method 200 continues to step 250.

In step 250, the degradation profiles are used to enhance one or more regions of the input image 110. One or more controlling parameters are determined based on the degradation profiles generated at the degradation profile module 104. It follows that one or more image enhancement algorithms may be utilized to enhance the input image 110 depending on the values of the controlling parameters. In any case, the controlling parameters will be associated with like-kind algorithms. For example, a controlling parameter associated with rain may be used with a rain removal algorithm to enhance input image 110. Similarly, any other controlling parameters gathered from the degradation profiles may be associated with one or more designated image enhancement algorithms to further enhance input image 110. The method 200 ends.

Now with reference to FIG. 4, there is shown a method 300 of enhancing an input image 110 obtained from the one or more cameras 32 on the vehicle 12. The method 300 includes steps 310, 320, 330, 340, and 350, many of which are similar to steps 210, 220, 230, 240, and 250 of the method 200 (FIG. 3).

A degradation profile generation model may be included in the sensor feature extraction module 102 and, in embodiments, this model may be an ML model or use an ML technique, such as, for example, a neural network, support vector machines, random forests, genetic algorithms, and decision trees. The degradation profile generation model takes, as input, the sensor feature fusion data and generates, as output, degradation profile data representative of a degradation profile. In embodiments, one iteration of the degradation profile generation model is used to generate a single degradation profile and so multiple iterations of the degradation profile are executed to generate a plurality of degradation profiles; thus, in such embodiments, generating the enhanced image may include executing an iteration of the degradation profile generation model for each region of the plurality of region. In other embodiments, the degradation profile generation model generates a plurality of degradation profiles and, in embodiments, a single iteration of the degradation profile generation model generates a global degradation profile and at least one local degradation profile for the input image.

According to embodiments, the degradation profile generation model is or includes one or more ML regressors and/or is or includes one or more ML classifiers. In embodiments, for each potential degradation of a set of potential degradations, a ML regressor or a ML classifier is chosen and used for generating an output degradation value; when the ML regressor is used, the output degradation value may be a floating point value; and when the ML classifier is used, the output degradation value may be a Boolean or flag, or other discrete classification. In embodiments, the ML classifier uses a genetic algorithm, a decision tree, a random forest, or a support vector machine. In embodiments, the ML regressor uses a random forest or a support vector machine. Of course, other regression and/or classification techniques may be used for the ML classifier and/or ML regressor.

In embodiments, an image enhancement model is included in the image enhancement module 106 and is used to generate the enhanced image 114 based on degradation profile information, such as degradation profiles for one or more regions of the input image 110. The image enhancement model maps degradation profiles to one or more controlling parameters for one or more image enhancement techniques.

In one example, the input image 110 has multiple degradations, with at least one of the degradations affecting the image globally and another degradation only affecting the image locally at a local block or region. In this example, the input image 110 includes a brightness degradation, such as a result of direct sunlight or specular reflections thereof, and the input image 110 also includes a rain streak degradation. In this instance, the brightness degradation affects the entire input image (global) and the rain streak degradation affects only a portion of the input image (local). Given this example input image 110, the method 300 is used to generate an enhanced input image that is then displayed on the targe display, such as the in-vehicle display 36 of the vehicle 12. In embodiments, the method 300 is carried out by an onboard controller of a vehicle, such as the onboard vehicle computer 30 of the vehicle 12. The method 300 applies to input images which present similar or entirely different degradations than the example provided here as it should be appreciated that the purpose of using the present example is not for limiting the method 300 in any way, but rather for illustrating real-world exemplary scenarios and effects of the method 300.

The method 300 begins with step 310, wherein an input image is obtained. The input image may be represented as an electronic data file that is stored in memory of the vehicle 12, such as in the memory 42 of the onboard vehicle computer 30 of the vehicle 12. The input image may be an sRGB image, for example. In some embodiments, the input image may be obtained from a camera of the vehicle 12, such as one of the camera(s) 32 of the vehicle 12. In some embodiments, the input image is obtained at the onboard vehicle computer 30 of the vehicle 12. In at least one embodiment, a portion of the input image or the whole input image may be sent from the backend server(s) 18 to the vehicle 12 and obtained at the onboard vehicle computer 30. The method 300 continues to step 320.

In step 320, environment sensor data is obtained. In at least some embodiments, the environment sensor data is gathered by one or more environment sensor(s) 38. The environment sensor data 112 may be represented as an electronic data file that is stored in memory of the vehicle 12, such as in the memory 42 of the onboard vehicle computer 30 of the vehicle 12. In embodiments, one of the environment sensor(s) 38 may be a light sensor which may be beneficial for indicating the light intensity in the environment surrounding the vehicle 12. With respect to the example input image 110 provided above, some of the environment feature information that may be extracted using the light sensor may include a light intensity value that may indicate bright sunlight is affecting the input image, for example. Such information may be combined with other feature information extracted from the input image 510 to generate the sensor feature fusion data. The method 300 proceed to step 330.

In step 330, sensor feature fusion data is generated based on the input image and the environment sensor data. The input image 110 and environment sensor data 112 are captured and feature characteristics are extracted based on one or more feature descriptors, which were introduced above with respect to the sensor feature extraction module 102. The feature characteristics gathered from the input image 110 and environment sensor data 112 may then be combined into a feature vector $f_c$. In view of above-discussed example of the input image 110, at least some of the data extracted from the input image 110 will include information concerning the brightness degradation and the rain streak degradation. Such information will be combined and represented by the feature vector $f_c$. As mentioned with respect to method 200, feature dimension reduction may be used on the feature vector $f_c$ to obtain the reduced feature vector $f_r$. It should be appreciated that, in some embodiments, step 320 is omitted, step 330 is modified to generate sensor feature data based on the input image, and step 340 is modified to generate the degradation profile based on the sensor feature data. The method 300 continues to step 340.

In step 340, multiscale degradation profile data is determined based on the sensor feature fusion data. The multiscale degradation profile data is data indicating a degradation profile for each region of one or more regions defined by a first scale and for each region of one or more regions defined by a second scale. For example, as shown in the depicted embodiment of FIG. 4, a global degradation profile is determined at sub-step 342 for a global region and a local degradation profile is determined at sub-step 344 for a plurality of local regions. The global region is defined according to a first scale or a global scale and the second region is defined according to a second scale or a local scale (or first local scale). For each region, such as the global region and each of the plurality of local regions, a degradation profile is determined based on the sensor feature fusion data received at the sensor feature extraction module 102. In embodiments, the degradation profile specifies an output degradation value determined based on a probability histogram that is generated using a 1-vs-all regressors/classifiers analysis. For example, a predetermined set of potential degradations are stored in memory and may include, for example, those degradations that the system and method is concerned with and is to search for within captured or received input images. In embodiments, the degradation profile specifies an output degradation value for each potential degradation of the set of potential degradations. In embodiments, a machine learning (ML) technique, such as a neural network (NN), genetic algorithms, random forests, support vector machines, and/or decision trees (e.g., for classification), may be used to generate the degradation profile (or the output degradation values at the output of the ML technique) based on the sensor feature data, such as based on the sensor feature fusion data.

According to embodiments, evaluating the input image on a global scale may involve assessing the input image as a whole or breaking it up into two, three, or four subregions or blocks, for example. Although the input image may be evaluated only on one scale, however, evaluating the input image on more than one scale (i.e., multiscale) is beneficial for accurately identifying and characterizing degradations. Irrespective of the number of regions or blocks established to evaluate the input image, the degradation profile may be used to generate a probability histogram of each degradation based on 1-vs-all regressors analysis. At this stage, the degradation profile output may indicate a type-value item for each degradation. With respect to the present example input image 110, the brightness degradation is said to affect the entire image so the degradation profile is representative of the global scale and indicates a type-value item which includes a value (e.g., between 0 and 1) and a type (e.g., brightness degradation) for the global region. In a similar fashion, because the rain streak degradation is said to only affect a portion of the input image, the degradation profile is representative of a local scale and indicates a type-value item that includes a degradation value and type for the region corresponding to the affected portion. Different combinations of degradation types and amounts are possible, as the above example is only one combination of n-number of combinations. The method 300 continues to step 350.

In step 350, controlling parameters for image enhancements are determined based on the multiscale degradation profile data. In embodiments, each controlling parameter is for an image enhancement technique and, in embodiments, multiple controlling parameters may be used for the same image enhancement technique. The controlling parameters are used as input, along with image data, into the image enhancement technique so as to apply the image enhancement technique to the image data according to a desired extent and/or in a desired manner. In general, a degradation type (e.g., rain streak) is associated with one or more image enhancement techniques that may be (or are often) applicable to addressing the associated degradation type- these associations may be referred to as degradation-enhancement technique associations and data representing degradation-enhancement technique associations is referred to as degradation-enhancement technique association data. The degradation-enhancement technique association data is predetermined and stored in memory, for example. In embodiments, the degradation-enhancement technique association data is updated periodically via over-the-air (OTA) updates from a backend server.

The degradation profiles are used to enhance one or more regions of the input image 110. One or more controlling parameters are determined based on the degradation profiles generated at the degradation profile module 104. In view of the example above, controlling parameters may be determined based on the degradation profile representative of the global scale, the degradation profile representative of the local scale, or based on both of the degradation profiles taken together. The method 300 continues to step 360.

In step 360, an enhanced image is generated based on applying one or more image enhancement techniques to the input image in accordance with the one or more controlling parameters. One or more image enhancement algorithms may be utilized to enhance the input image 110 depending on the values of the controlling parameters. In any case, the controlling parameters will be associated with like-kind algorithms. In the present examples, a rain removal algorithm may be used to enhance in the image in view of the rain streak degradation. The method 300 continues to step 370.

In step 370, the enhanced image is displayed on an electronic display. After the enhanced image is generated, the enhanced image is displayed on the electronic display, which may be the in-vehicle display 36, for example. The enhanced image may be provided form the onboard computer 30, where it may be generated, to the in-vehicle display 36 via the communications bus 39. In embodiments, the steps 310-370 are performed continuously using an input video stream having a plurality of input images captured by an image sensor (e.g., the camera 32) so as to generate a plurality of enhanced images that are then output at the electronic display (e.g., display 36) as an enhanced video stream. The enhanced video stream may be streamed to the electronic display 36 for viewing by a passenger of the vehicle 12, such as for viewing areas surrounding the vehicle 12. The method 300 ends.

It is to be understood that the foregoing description is of one or more embodiments of the invention. The invention is not limited to the particular embodiment(s) disclosed herein, but rather is defined solely by the claims below. Furthermore, the statements contained in the foregoing description relate to the disclosed embodiment(s) and are not to be construed as limitations on the scope of the invention or on the definition of terms used in the claims, except where a term or phrase is expressly defined above. Various other embodiments and various changes and modifications to the disclosed embodiment(s) will become apparent to those skilled in the art.

As used in this specification and claims, the word "enhancement", "enhanced", and its other forms are not to be construed as limiting the invention to any particular type or manner of image enhancement, but are generally used for identifying the processing used to address degradations of an image, modules or components used for such processing, or the processing result of such processing. However, it should be appreciated that those skilled in the art will appreciate that a variety of image enhancement techniques may be used, and each image enhancement technique is a technique for addressing a specific degradation or class of degradations of an image, such as those examples provided herein.

As used in this specification and claims, the terms "e.g.," "for example," "for instance," "such as," and "like," and the verbs "comprising," "having," "including," and their other verb forms, when used in conjunction with a listing of one or more components or other items, are each to be construed as open-ended, meaning that the listing is not to be considered as excluding other, additional components or items. Other terms are to be construed using their broadest reasonable meaning unless they are used in a context that requires a different interpretation. In addition, the term "and/or" is to be construed as an inclusive OR. Therefore, for example, the phrase "A, B, and/or C" is to be interpreted as covering all of the following: "A"; "B"; "C"; "A and B"; "A and C"; "B and C"; and "A, B, and C."

The present invention also relates to the following embodiments:

Embodiment 1: A method for generating an enhanced image includes:

obtaining an input image from an image sensor;

generating sensor feature data, wherein the sensor feature data is based on the input image;

for each region of a plurality of regions of the input image, determining a degradation profile based on the sensor feature data, wherein the degradation profile indicates, for each of a plurality of degradations, a degradation amount; and

generating an enhanced image based on the degradation profile for each region of the plurality of regions.

Embodiment 2: The method of embodiment 1, wherein generating the sensor feature data includes generating a combined feature vector based on the input image and environment sensor data and then generating a reduced feature vector based on dimension reduction of the combined feature vector, and wherein the environment sensor data is obtained from an environment sensor that is separate from the image sensor.

Embodiment 3: The method of embodiment 2, wherein the dimension reduction of the combined feature vector is performed using principal component analysis (PCA).

Embodiment 4: The method of embodiment 2, wherein the combined feature vector is generated using a machine learning (ML) and feature description techniques.

Embodiment 5: The method of any one of the previous embodiments, wherein the plurality of regions includes a global region and a first plurality of regions corresponding to a first local scale.

Embodiment 6: The method of embodiment 5, wherein the plurality of regions includes a second plurality of regions corresponding to a second local scale that is different than the first local scale.

Embodiment 7: The method of embodiment 5, wherein each region of the first plurality of regions corresponds to a local block of the input image.

Embodiment 8: The method of embodiment 5, wherein multiscale degradation profile data is generated based on determining the degradation profile for at least one region of the first plurality of regions and the degradation profile for the global region.

Embodiment 9: The method of embodiment 8, wherein the multiscale degradation profile data is used to determine one or more controlling parameters that are used as input into one or more image enhancement techniques so as to control the one or more image enhancement techniques when applied to the input image to generate the enhanced image.

Embodiment 10: The method of embodiment 9, wherein generating the enhanced image includes:

applying at least one of the one or more image enhancement techniques to the global region to generate an enhanced global image;

applying at least one other image enhancement technique of the one or more image enhancement techniques to at least one of the first plurality of regions so as to generate an enhanced local image layer; and

generating the enhanced image based on the enhanced global image layer and the enhanced local image layer.

Embodiment 11: The method of any one of the previous embodiments, wherein, for the degradation profile for each region of the plurality of regions, the plurality of degradations include a predetermined plurality of degradations, and wherein an output degradation value is determined for each of the predetermined plurality of degradations.

Embodiment 12: The method of embodiment 11, wherein the output degradation value for each of the predetermined plurality of degradations is used for determining a controlling parameter for use by an image enhancement technique for controlling application of the image enhancement technique when generating the enhanced image.

Embodiment 13: The method of any one of the previous embodiments, wherein the degradation profiles are determined as a result of a machine learning technique that takes, as input, the sensor feature data and generates, as output, the degradation amount.

Embodiment 14: The method of any one of the previous embodiments, wherein the sensor feature data is generated by generating a reduced feature vector based on dimension reduction of a feature vector having feature values extracted from the input image.

Embodiment 15: The method of embodiment 14, wherein the reduced feature vector is generated using a machine learning (ML) technique that takes, as input, the input image and/or the feature vector and generates, as output, the reduced feature vector.

Embodiment 16: The method of any one of the previous embodiments, wherein a first enhanced local image layer is generated for a first plurality of regions of the plurality of regions and a second enhanced local image layer is generated for a second plurality of regions of the plurality of regions, wherein the first plurality of regions is sized according to a first scale and the second plurality of regions is sized according to a second scale that is different than the first scale, and wherein the first enhanced local image layer and the second enhanced local image layer are combined to form the enhanced image.

Embodiment 17: An image enhancement system, comprising:

at least one processor; and

memory storing computer instructions;

wherein the image enhancement system is configured so that the at least one processor executes the computer instructions, which, when executed by the at least one processor, cause the image enhancement system to:

obtain an input image from an image sensor;

generate sensor feature fusion data, wherein the sensor feature data is based on the input image;

for each region of a plurality of regions of the input image, determine a degradation profile based on the sensor feature data, wherein the degradation profile indicates, for each of a plurality of degradations, a degradation amount; and

generate an enhanced image based on the degradation profile for each region of the plurality of regions.

Embodiment 18: An onboard image enhancement system for a vehicle, comprising:

an onboard vehicle computer for a vehicle having at least one processor and memory storing computer instructions;

an image sensor configured to be mounted onto the vehicle and to face an area exterior to the vehicle and configured to capture one or more input images; and

an environment sensor configured to capture environment data concerning the environment of the vehicle;

wherein the onboard vehicle computer is configured so that when the at least one processor executes the computer instructions, the onboard vehicle computer processes the one or more input images to generate one or more enhanced images using an image enhancement process that includes:

obtaining the input image from the image sensor;

obtaining the environment sensor data from the environment sensor;

generating sensor feature fusion data, wherein the sensor feature fusion data is based on the input image and the environment sensor data;

for each region of a plurality of regions of the input image, determining a degradation profile based on the sensor feature fusion data, wherein the degradation profile indicates, for each of a plurality of degradations, a degradation amount;

generating an enhanced image based on the degradation profile for each region of the plurality of regions; and

providing the enhanced image for display at an electronic display of the vehicle.

Embodiment 19: The onboard image enhancement system of embodiment 18, wherein the one or more input images include a plurality of images part of an input video stream, wherein the one or more enhanced images are a plurality of enhanced images.

Embodiment 20: The onboard image enhancement system of embodiment 19, wherein the onboard image enhancement system is configured to cause the plurality of enhanced images to be displayed at the electronic display as an enhanced video stream.

**Claims**

1. A method for generating an enhanced image, comprising:

   obtaining an input image from an image sensor;
   generating sensor feature data, wherein the sensor feature data is based on the input image;
   for each region of a plurality of regions of the input image, determining a degradation profile based on the sensor feature data, wherein the degradation profile indicates, for each of a plurality of degradations, a degradation amount; and
   generating an enhanced image based on the degradation profile for each region of the plurality of regions.

2. The method of claim 1, wherein generating the sensor feature data includes generating a combined feature vector based on the input image and environment sensor data and then generating a reduced feature vector based on dimension reduction of the combined feature vector, and wherein the environment sensor data is obtained from an environment sensor that is separate from the image sensor.

3. The method of claim 2, wherein the dimension reduction of the combined feature vector is performed using principal component analysis (PCA); and/or wherein the combined feature vector is generated using a machine learning (ML) and feature description techniques.

4. The method of any preceding claim, wherein the plurality of regions includes a global region and a first plurality of regions corresponding to a first local scale.

5. The method of claim 4, wherein the plurality of regions includes a second plurality of regions corresponding to a second local scale that is different than the first local scale; and/or wherein each region of the first plurality of regions corresponds to a local block of the input image.

6. The method of claims 4 or 5, wherein multiscale degradation profile data is generated based on determining the degradation profile for at least one region of the first plurality of regions and the degradation profile for the global region.

7. The method of claim 6, wherein the multiscale degradation profile data is used to determine one or more controlling parameters that are used as input into one or more image enhancement techniques so as to control the one or more image enhancement techniques when applied to the input image to generate the enhanced image.

8. The method of claim 7, wherein generating the enhanced image comprises:

   applying at least one of the one or more image enhancement techniques to the global region to generate an enhanced global image;
   applying at least one other image enhancement technique of the one or more image enhancement techniques to at least one of the first plurality of regions so as to generate an enhanced local image layer; and
   generating the enhanced image based on the enhanced global image layer and the enhanced local image layer.

9. The method of any preceding claim, wherein, for the degradation profile for each region of the plurality of regions, the plurality of degradations include a predetermined plurality of degradations, and wherein an output degradation value is determined for each of the predetermined plurality of degradations and, optionally, wherein the output degradation value for

27 **EP 4 390 836 A1** 28

each of the predetermined plurality of degradations is used for determining a controlling parameter for use by an image enhancement technique for controlling application of the image enhancement technique when generating the enhanced image.

10. The method of any preceding claim, wherein the degradation profiles are determined as a result of a machine learning technique that takes, as input, the sensor feature data and generates, as output, the degradation amount.

11. The method of any preceding claim, wherein the sensor feature data is generated by generating a reduced feature vector based on dimension reduction of a feature vector having feature values extracted from the input image and, optionally, wherein the reduced feature vector is generated using a machine learning (ML) technique that takes, as input, the input image and/or the feature vector and generates, as output, the reduced feature vector.

12. The method of any preceding claim, wherein a first enhanced local image layer is generated for a first plurality of regions of the plurality of regions and a second enhanced local image layer is generated for a second plurality of regions of the plurality of regions, wherein the first plurality of regions is sized according to a first scale and the second plurality of regions is sized according to a second scale that is different than the first scale, and wherein the first enhanced local image layer and the second enhanced local image layer are combined to form the enhanced image.

13. An image enhancement system, comprising:

at least one processor; and
memory storing computer instructions;
wherein the image enhancement system is configured so that the at least one processor executes the computer instructions, which, when executed by the at least one processor, cause the image enhancement system to carry out an image enhancement process that includes:

obtaining an input image from an image sensor;
generating sensor feature data, wherein the sensor feature data is based on the input image;
for each region of a plurality of regions of the input image, determining a degradation profile based on the sensor feature data, wherein the degradation profile indicates, for each of a plurality of degradations, a degradation amount; and
generating an enhanced image based on the degradation profile for each region of the plurality of regions.

14. An onboard image enhancement system for a vehicle, comprising the image enhancement system of claim 13, wherein the onboard image enhancement system further comprises:

an onboard vehicle computer for a vehicle having the at least one processor and memory storing computer instructions;
an image sensor configured to be mounted onto the vehicle and to face an area exterior to the vehicle and configured to capture the input image and one or more additional input images; and
an environment sensor configured to capture environment data concerning the environment of the vehicle;
wherein the onboard vehicle computer is configured so that when the at least one processor executes the computer instructions, the onboard vehicle computer processes the one or more input images to generate one or more enhanced images using the image enhancement process, and wherein the image enhancement process further comprises:

obtaining the input image from the image sensor;
obtaining the environment sensor data from the environment sensor;
generating the sensor feature data as sensor feature fusion data, wherein the sensor feature fusion data is based on the input image and the environment sensor data;
for each region of the plurality of regions of the input image, determining the degradation profile based on the sensor feature fusion data, wherein the degradation profile indicates, for each of the plurality of degradations, the degradation amount; and
providing the enhanced image for display at an electronic display of the vehicle.

15. The onboard image enhancement system of claim 14, wherein the one or more input images include a plurality of images part of an input video stream, wherein the one or more enhanced images are a plurality of enhanced images and, optionally, wherein the onboard image enhancement system is configured to cause the plurality of enhanced images to be displayed at the electronic display as an enhanced video stream.

15

# FIG. 1

10

26

22

28

BACKEND SERVER 18

Processor(s) 48

Memory 50

LAND NETWORK 20

12

16

Computer 30

Processor 40

Memory 42

Network Access Device 34

14

39

Camera(s)
32

Display
36

Env. Sensor
38

**FIG. 2**

100

102 — Sensor Feature Extraction Module
- Feature Descriptors
- Feature Dimension Reduction
- Feature Fusion

104 — Multi-Scale Degradation Profile Module
- Global Degradation
- Local #1 Degradation
- Local #N Degradation

106 — Image Enhancement Module
- Image Enhancement – Global
- Image Enhancement – Local #1
- Image Enhancement – Local #N

110 — Image Input

112 — Environment Sensor Data

114 — Output

EP 4 390 836 A1

## FIG. 3

Begin ⟋ 200

↓

| Obtain Input Image | ⟋ 210 |

↓

| Obtain Environment Sensor Data | ⟋ 220 |

↓

| Generate Sensor Fusion Feature Data | ⟋ 230 |

↓

| Determine Degradation Profile | ⟋ 240 |

↓

| Generate Enhanced Image | ⟋ 250 |

↓

End

# FIG. 4

```
        ( Begin )              ⟋⌐ 300

              │
              ▼
┌──────────────────────────────┐
│      Obtain Input Image       │⟋⌐ 310
└──────────────────────────────┘
              │
              ▼
┌──────────────────────────────┐
│  Obtain Environment Sensor    │⟋⌐ 320
│            Data               │
└──────────────────────────────┘
              │
              ▼
┌──────────────────────────────┐
│ Generate Sensor Feature       │⟋⌐ 330
│        Fusion Data            │
└──────────────────────────────┘
              │
              ▼
┌──────────────────────────────┐
│ Determine Multiscale          │⟋⌐ 340
│ Degradation Profile Data      │
│ ┌──────────────────────────┐ 342
│ │ Determine Global          │⟋
│ │ Degradation Profile       │
│ └──────────────────────────┘
│ ┌──────────────────────────┐ 344
│ │ Determine Local           │⟋
│ │ Degradation Profile       │
│ └──────────────────────────┘
└──────────────────────────────┘
              │
              ▼
┌──────────────────────────────┐
│ Determine Controlling         │⟋⌐ 350
│ Parameters Based On           │
│ Multiscale Degradation        │
│ Profile Data                  │
└──────────────────────────────┘
              │
              ▼
┌──────────────────────────────┐
│   Generate Enhanced Image     │⟋⌐ 360
└──────────────────────────────┘
              │
              ▼
┌──────────────────────────────┐
│    Display Enhanced Image     │⟋⌐ 370
└──────────────────────────────┘
              │
              ▼
          (  End  )
```

| | Europäisches Patentamt<br>European Patent Office<br>Office européen des brevets | **EUROPEAN SEARCH REPORT** | Application Number<br>**EP 23 21 8679** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 114 119 395 A (UNIVERSITY OF SCIENCE AND TECHNOLOGY BEIJING) 1 March 2022 (2022-03-01) | 1,4,9, 10,13-15 | INV.<br>G06T5/77<br>G06T5/20 |
| A | * the whole document * | 2,3,5-8, 11,12 | G06T5/60 |
| Y | US 2021/042886 A1 (TOKIZAKI YUKI [JP] ET AL) 11 February 2021 (2021-02-11) | 1,4,9, 10,13-15 | |
| A | * paragraphs [0039] – [0042], [0051] – [0052], [0093] – [0094]; figures 1-5 * | 2,3,5-8, 11,12 | |
| A | HAMZEH YAZAN ET AL: "A Review of Detection and Removal of Raindrops in Automotive Vision Systems", JOURNAL OF IMAGING, vol. 7, no. 3, 10 March 2021 (2021-03-10), page 52, XP093141650, ISSN: 2313-433X, DOI: 10.3390/jimaging7030052 * section 6.8; pages 33-35; figure 27 * | 1-15 | |

| | |
|---|---|
| | **TECHNICAL FIELDS SEARCHED (IPC)**<br><br>G06T |

The present search report has been drawn up for all claims

| Place of search | Date of completion of the search | Examiner |
|---|---|---|
| Munich | 16 April 2024 | Krawczyk, Grzegorz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 8679

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2024

| Patent document cited in search report | | Publication date | Patent family member(s) | | Publication date |
|---|---|---|---|---|---|
| CN 114119395 | A | 01-03-2022 | NONE | | |
| US 2021042886 | A1 | 11-02-2021 | CN | 111868778 A | 30-10-2020 |
| | | | JP | 7160085 B2 | 25-10-2022 |
| | | | JP | WO2019181096 A1 | 11-03-2021 |
| | | | US | 2021042886 A1 | 11-02-2021 |
| | | | WO | 2019181096 A1 | 26-09-2019 |

EPO FORM P0459

For more details about this annex : see Official Journal of the European Patent Office, No. 12/82